# EUROPÄISCHE PATENTSCHRIFT

(11) **EP 2 531 821 B1**
(45) Veröffentlichungstag und Bekanntmachung des Hinweises auf die Patenterteilung: **12.07.2017**
(21) Anmeldenummer: 11701756.6
(22) Anmeldetag: 22.01.2011
(51) Int. Cl.: G01D 11/30, G01K 1/16

(54) **SENSORANORDNUNG**
SENSOR ARRANGEMENT
DISPOSITIF CAPTEUR

(30) Priorität: 04.02.2010 DE 102010006788
(43) Veröffentlichungstag der Anmeldung: 12.12.2012
(73) Patentinhaber: E+E Elektronik Ges.m.b.H., 4210 Engerwitzdorf (AT); Technische Universität Wien, 1040 Wien (AT)
(72) Erfinder: ZOTL, Ernst, A-4209 Engerwitzdorf (AT); NIESSNER, Georg, A-4209 Engerwitzdorf (AT); SCHMID, Ulrich, A-1140 Wien (AT); SMETANA, Walter, A-1050 Wien (AT)
(74) Vertreter: Hofmann, Ernst
(86) Internationale Anmeldenummer: PCT/EP2011/000264
(87) Internationale Veröffentlichungsnummer: WO 2011/095286

(56) Entgegenhaltungen:
- DE-A1-102006 015 384
- DE-A1-102006 032 549
- US-A- 5 798 684
- US-A1- 2002 157 463
- US-A1- 2003 019 290

## Beschreibung

Die vorliegende Erfindung betrifft eine Sensoranordnung, die insbesondere zur Erfassung von Prozessgrößen in Umgebungen mit hohen Temperaturen geeignet ist. Ferner eignet sich die Sensoranordnung für Anwendungen, bei der für die Messung der entsprechenden Prozessgrößen an sich bereits hohe Temperaturen erforderlich sind.

Für bestimmte Messaufgaben, in denen ein oder mehrere Prozessgrößen zu erfassen sind, ist es erforderlich, dass die Messung auch in Umgebungen mit hohen Temperaturen zuverlässig funktioniert. Beispielsweise kann es sich hierbei um die Messung der Prozessgrößen Temperatur oder Strömungsgeschwindigkeit in Kraftfahrzeugen handeln, die im Abgasstrang zur Optimierung der Motorleistung und zur Reduzierung von Emissionen erfasst werden sollen. Desweiteren kann es sich Messungen handeln, bei denen das jeweilige Sensorelement aktiv auf hohe Temperaturen aufgeheizt werden muss.

Üblicherweise werden zur Erfassung dieser Prozessgrößen als Sensorelemente Dünnschichtsensoren verwendet. Diese bestehen aus dünnen Trägersubstraten, beispielsweise aus Keramik, auf denen Sensorwindungen oder ggf. Heizerstrukturen aufgebracht sind. Geeignete Sensoranordnungen mit derartigen Dünnschichtsensoren umfassen neben den eigentlichen Sensorelementen noch Trägerelemente, auf denen die Sensorelemente angeordnet sind, um darüber das Sensorelement mechanisch am jeweiligen Ort der Messung zu fixieren.

Insbesondere für Hochtemperaturanwendungen geeignete Sensoranordnungen sind etwa aus der DE 10 2006 032 549 A1 oder aus der DE 10 2006 015 384 A1 bekannt. Hierbei ist jeweils ein stabförmiges Trägerelement vorgesehen, das aus mehreren keramischen Schichten besteht. An einem Ende des Trägerelements ist in einer Ausnehmung bzw. Durchbrechung das Sensorelement angeordnet. Das Sensorelement ist hierbei jeweils in der Ausnehmung über Trägerarme mit geringem Querschnitt mit dem Trägerelement verbunden. Auf diese Art und Weise ist insbesondere eine thermische Entkopplung des Sensorelements vom Trägerelement gewährleistet. Die erfolgende Messung über das Sensorelement wird auf diese Art und Weise nicht durch Wärmezufuhr oder Wärmeabfuhr über das Trägerelement verfälscht. Desweiteren lässt sich im Fall einer ggf. vorgesehenen aktiven Aufheizung des Sensorelements durch ein integriertes Heizerelement aufgrund der thermischen Entkopplung die zur Aufheizung erforderliche Energiemenge sowie die resultierende Abwärme verringern.

Als nachteilig an diesen Lösungen ist anzuführen, dass das Trägerelement aus Keramik-Material insbesondere im Bereich der Trägerarme nicht hinreichend mechanisch belastbar ist. Auch bei großen Temperaturänderungen besteht in diesen Bereichen Bruchgefahr. Hinzu kommt, dass die bekannten Lösungen keine kostengünstige Fertigung derartiger Sensoranordnungen ermöglichen. Ferner ist eine zuverlässige Integration eines rein aus keramischem Material aufgebauten Sensorelementes in eine aus metallischen Werkstoffen bestehende Umgebung eines technischen Systems, das bei hohen Temperaturen betrieben wird, nur sehr aufwändig zu realisieren.

Die US 2002/0157463 A1 offenbart in Figur 7 einen Strömungssensor-Aufbau mit einem Silizium-Trägerelement, auf dessen Oberseite eine Polymer-Silizium-Trägerschicht sowie eine SiN-Membranschicht angeordnet ist. Im Bereich einer Ausnehmung des Trägerelements ist ein Sensorelement in Form eines Messwiderstands platziert. Das Sensorelement ist mit Leiterbahnen auf dem Trägerelement verbunden, über die die erzeugten Sensorsignale einer nachgeordneten Auswerteelektronik zuführbar sind.

Aus der US 5,798,684 A ist aus Figur 1b ein Aufbau eines Dünnschicht-Temperatursensors bekannt, bei dem auf einem Silizium-Trägerelement eine SiO₂-Schicht angeordnet ist; darüber befindet sich eine Aluminiumoxid- oder eine Tantaloxidschicht. Im Bereich einer Ausnehmung des Trägerelements ist über einer weiteren SiO₂- oder einer SiNO-Schicht ein temperaturempfindlicher Widerstandsfilm angeordnet. Ferner vorgesehen sind Leiterbahnen sowie Elektroden auf der obersten Schicht, um die Messsignale abzugreifen.

Die US 2003/019290 A1 zeigt in Figur 1b einen Strömungssensor mit einem Silizium-Trägerelement und einer darauf angeordneten SiN-Schicht sowie einer darüber vorgesehenen SiO-Schicht. Im Bereich einer Ausnehmung des Trägerelements befindet sich dünne Metallfilme, die als Messwiderstand fungieren. Vorgesehen sind ferner Leiterbahnen, die den Messwiderstand mit Kontaktierungselektroden verbinden.

Aufgabe der vorliegenden Erfindung ist es, eine Sensoranordnung zur Erfassung einer oder mehrerer Prozessgrößen anzugeben, die insbesondere für Umgebungen mit hohen Temperaturen oder für einen Betrieb bei hohen Temperaturen geeignet ist. Hierbei wird neben einer hohen mechanischen Stabilität und einer vereinfachten Systemintegration auch eine möglichst kostengünstige Fertigung der Sensoranordnung angestrebt.

Diese Aufgabe wird durch eine Sensoranordnung mit den Merkmalen des Anspruchs 1 gelöst.

Vorteilhafte Ausführungsformen der erfindungsgemäßen Sensoranordnung ergeben sich aus den Maßnahmen, die in den von Anspruch 1 abhängigen Ansprüchen aufgeführt sind.

Die erfindungsgemäße Sensoranordnung zur Erfassung mindestens einer Prozessgröße umfasst hierbei
- ein Trägerelement, das mindestens eine Ausnehmung aufweist,
- eine auf dem Trägerelement angeordnete Trägerschicht,
- eine über der Trägerschicht zumindest im Bereich der Ausnehmung angeordnete Membranschicht mit ein oder mehreren elektrisch-leitfähigen Leiterbahnen sowie
- mindestens ein auf der Membranschicht angeordnetes Sensorelement, das über eine temperaturstabile Kontaktierung mit mindestens einer Leiterbahn elektrisch leitend verbunden ist.

Vorzugsweise ist das Trägerelement aus einem hochtemperatur- und korrosionsbeständigen Material ausgebildet, beispielsweise aus Stahl.

Das Trägerelement kann als plättchenförmiger Stab ausgebildet werden, an dessen einem Längsende die Ausnehmung angeordnet ist.

In einer möglichen Ausführungsform weist das Trägerelement eine bevorzugte Dicke im Bereich zwischen 0,5 mm und 2 mm auf.
Mit Vorteil ist die Trägerschicht als Transfertape ausgebildet.

Hierbei kann die Trägerschicht eine bevorzugte Dicke im Bereich zwischen 10 µm und 200 µm aufweisen.

Es ist möglich, dass die Trägerschicht als poröse Zwischenschicht ausgebildet ist.

Die Membranschicht kann aus Keramik oder Glaskeramik bestehen, vorzugsweise aus einem LTCC-Material.

Die Leiterbahnen auf der Membranschicht können in Dünnschichttechnik oder in Dickschichttechnik ausgebildet werden.

Die Membranschicht kann eine Dicke im Bereich zwischen 50 µm und 500µm aufweisen.

Vorzugsweise werden die Materialien für das Trägerelement, die Trägerschicht und die Membranschicht derart gewählt, dass deren thermische Ausdehnungskoeffizienten um nicht mehr als 0.2 ppm/°C voneinander abweichen.

Das Sensorelement kann als Dünnschicht- oder Dickschichtsensor ausgebildet sein, wobei die Sensorwindungen z.B. mäanderförmig auf der Membranschicht angeordnet sind.

In einer möglichen Ausführungsform ist ferner vorgesehen, dass auf der Membranschicht für jede Leiterbahn ein Anschlussbereich ausgebildet ist, über den das Sensorelement mit einer Folgeelektronik verbindbar ist.

Die erfindungsgemäße Sensoranordnung stellt eine mechanisch stabile Lösung dar, bei der auch unter rauen Umgebungsbedingungen bzw. großen Temperaturschwankungen eine eventuelle Beschädigung der Sensoranordnung verringert werden kann. Ferner wird durch die Verwendung eines Metall-Transfertape-Keramik-Aufbaus gemäß einer bevorzugten Ausführungsform eine vereinfachte Systemintegration, z.B. durch Elektronenstrahlschweißen oder Spaltschweißen, ermöglicht. Eine gute thermische Entkopplung des Sensorelements vom Trägerelement ist zudem sichergestellt, so dass eventuelle Fehlmessungen vermieden werden können. Desweiteren ist eine kostengünstige Massenfertigung der erfindungsgemäßen Sensoranordnung möglich, da diese im Mehrfachnutzen fertigbar ist und abschließend eine Vielzahl einzelner Sensoranordnungen durch einfaches Trennen dünner Verbindungsstege zur Verfügung steht.

Weitere Einzelheiten und Vorteile der vorliegenden Erfindung seien anhand der nachfolgenden Beschreibung eines Ausführungsbeispiels der erfindungsgemäßen Sensoranordnungen in Verbindung mit den Figuren erläutert.

Es zeigt hierbei
- Figur 1: eine räumliche Ansicht eines Ausführungsbeispiels einer erfindungsgemäßen Sensoranordnung;
- Figur 2: eine erste Schnittansicht eines Teils der Sensoranordnung aus Figur 1;
- Figur 3: eine zweite Schnittansicht eines Teils der Sensor-anordnung aus Figur 1;
- Figur 4: das Trägerelement der Sensoranordnung aus Figur 1.

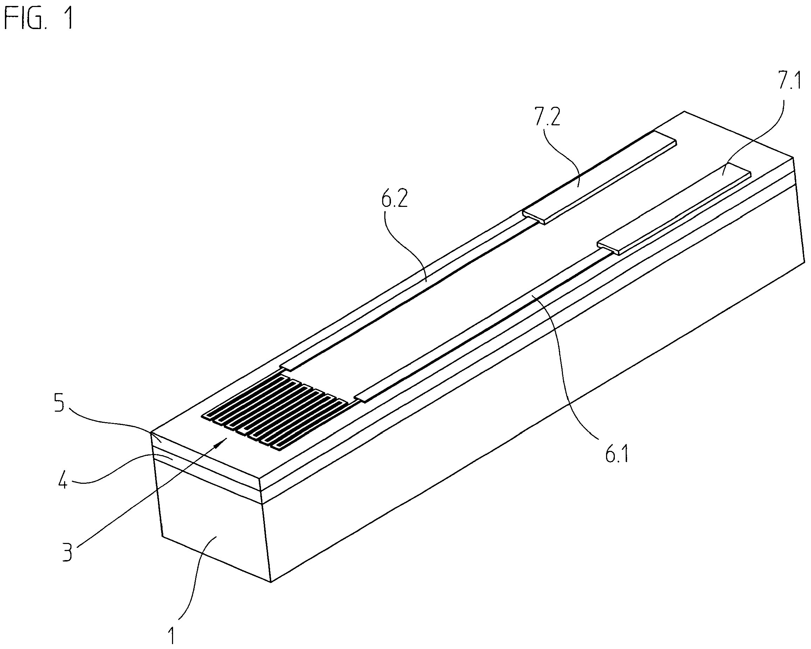

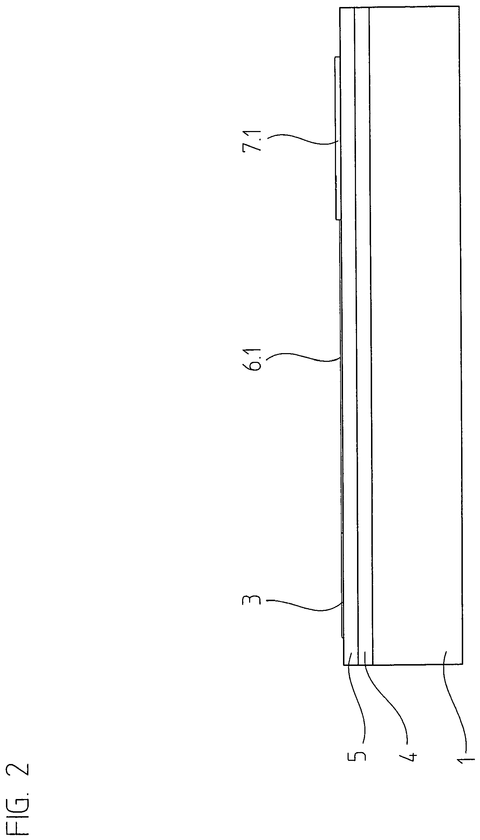

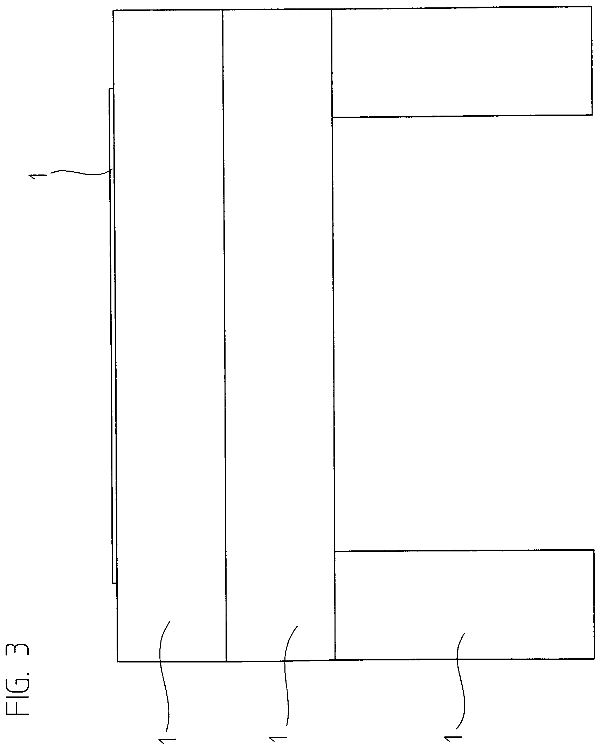

Anhand der Figuren 1 - 4 sei nachfolgend ein Ausführungsbeispiel einer erfindungsgemäßen Sensoranordnung im Detail beschrieben.

Die dargestellte Sensoranordnung zur Erfassung mindestens einer Prozessgröße umfasst ein Trägerelement 1, das im vorliegenden Beispiel als plättchenförmiger Stab bzw. als Stab mit rechteckförmigem Querschnitt ausgebildet, dessen Länge etwa im Bereich von 25mm bis 150mm liegt, dessen Breite typischerweise zwischen 2mm und 10mm liegt und dessen Dicke im Bereich zwischen 0.5mm und 2mm liegt. Das Trägerelement 1 dient zur mechanisch stabilen Anordnung des mindestens einen Sensorelements 3, über das ein oder mehrere Prozessgrößen erfasst werden, in der jeweiligen Anwendung. Hierbei kann es sich etwa um die Messung der Prozessgrößen Temperatur oder Strömungsgeschwindigkeit im Abgasstrang von Kraftfahrzeugen oder aber die Messung der Prozessgröße Partikelkonzentration handeln, die jeweils bei hohen Temperaturen zu erfassen sind.

Als Material ist für das Trägerelement 1 hierbei Stahl bzw. Stahlblech vorgesehen. Alternativ hierzu sind grundsätzlich auch andere Materialien verwendbar, sofern sie hinreichend hochtemperatur- und korrosionsbeständig sind und ein passendes thermisch-induziertes Dehnungsverhalten aufweisen. Geeignet wären etwa auch andere spezielle Metall-Legierungen etc..

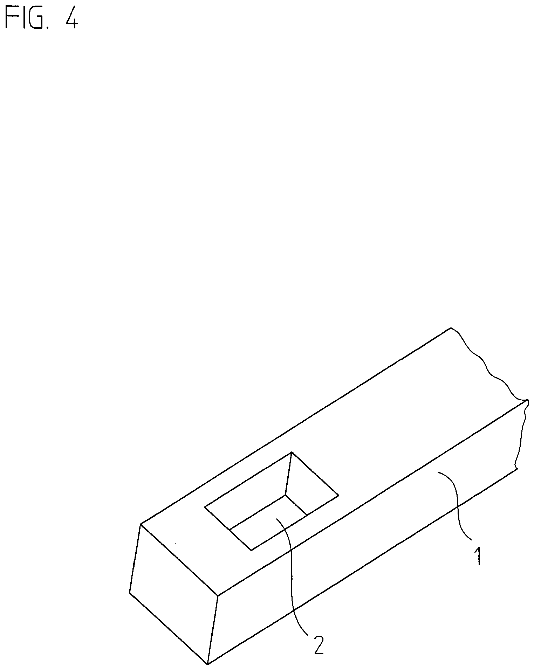

Wie aus Figur 4 ersichtlich, in der lediglich das Trägerelement 1 im unverbauten Zustand dargestellt ist, weist das Trägerelement 1 an einem Ende eine Ausnehmung 2 auf. Die Ausnehmung 2 ist im gezeigten Beispiel quadratisch ausgebildet und besitzt die Abmessungen 4 mm x 4 mm. Die Geometrie bzw. Abmessungen der Ausnehmung 2 sind hierbei in Abhängigkeit vom Sensorelement 3 zu wählen, das im Bereich der Ausnehmung 2 angeordnet wird, was nachfolgend noch im Detail erläutert wird.

Auf der Oberseite des Trägerelements 1 ist eine dünne Trägerschicht 4 angeordnet, die entweder die gesamte Fläche des Trägerelements 1 und damit auch die Ausnehmung 2 überdeckt oder aber im Bereich der Ausnehmung 2 eine Öffnung aufweist, die der Größe der Ausnehmung 2 entspricht. Die Trägerschicht 4 besitzt vorzugsweise eine Dicke im Bereich zwischen 10 µm und 200 µm. Im dargestellten Ausführungsbeispiel erstreckt sich die Trägerschicht 4 über die gesamte Oberseite des Trägerelements 1, was bei der Fertigung der erfindungsgemäßen Sensoranordnung Vorteile bietet.

Die dünne Trägerschicht 4 dient zum einen zur sicheren Befestigung bzw. Anbindung der darüber angeordneten Membranschicht 5 auf dem Trägerelement 1, wobei die Membranschicht 5 im gezeigten Beispiel ebenfalls ganzflächig auf der Seite des Trägerelements 1 angeordnet ist, welche auch von der Trägerschicht 4 bedeckt ist. Zum anderen soll die Trägerschicht 4 thermisch-induzierte Spannungen zwischen dem Trägerelement 1 und der Membranschicht 5 möglichst effektiv aufnehmen bzw. abbauen, die sich aufgrund der nicht überstimmenden thermischen Ausdehnungskoeffizienten ergeben.

Die Trägerschicht 4 kann beispielsweise als handelsübliches Transfertape ausgebildet sein, das beidseitig entsprechende Haftflächen aufweist. Im vorliegenden Ausführungsbeispiel muss sichergestellt sein, dass das verwendete Transfertape auf dem Stahlmaterial des Trägerelements haftet; geeignet hierfür ist z.B. das Transfertape ESL 41030 der Firma *ESL Electro Science.* Hierbei handelt es sich um ein glaskeramisches LTCC-Tape, dessen thermischer Ausdehnungskoeffient auf den des Trägerelements aus Stahl angepasst ist und das eine zuverlässige Haftung auf dem Stahlmaterial gewährleistet. Alternativ hierzu ist als Trägerschicht 4 auch eine Zwischenschicht in Form einer porösen metallischen Schicht einsetzbar, die z.B. auf das Trägerelement 1 aufgespritzt und auf der die Membranschicht 5 dann auflaminiert oder aufgesintert wird.

Die oberhalb bzw. über der Trägerschicht 4 angeordnete Membranschicht 5, die vorzugsweise eine Dicke im Bereich zwischen 50 µm und 500 µm besitzt, sollte im Rahmen der vorliegenden Erfindung zumindest im Bereich der Ausnehmung 2 angeordnet werden. Im vorliegenden Beispiel ist die Membranschicht 5 über den gesamten Bereich der Trägerschicht angeordnet, d.h. über die gesamte Oberseite des Trägerelements 1. Als Material für die Membranschicht 5 ist vorzugsweise ein Keramik- oder Glaskeramikmaterial vorgesehen, im konkreten Beispiel ein sog. LTCC-Material (Low Temperature Cofired Ceramics).

Bei der Auswahl geeigneter Materialien für die Trägerschicht 4 und die Membranschicht 5 sollte darauf geachtet werden, dass diese eine möglichst geringe Wärmeleitfähigkeit besitzen.

Als besonders vorteilhaft für eine hinreichende mechanische Stabilität des Aufbaus erweist es sich bei der Wahl der Materialien für das Trägerelement 1, die Trägerschicht 4 und die Membranschicht 5 desweiteren, wenn diese hinsichtlich ihrer thermischen Ausdehnungskoeffizienten möglichst gut aufeinander abgestimmt werden. Dies bedeutet, dass sich die thermischen Ausdehnungskoeffizienten dieser Elemente möglichst wenig unterscheiden sollten, vorzugsweise um nicht mehr als 0.2 ppm/°C. Auf diese Art und Weise kann sichergestellt werden, dass auch bei ggf. auftretenden starken Temperaturänderungen keine Beschädigung der erfindungsgemäßen Sensoranordnung auftritt.

Im Bereich der Membranschicht 5 sind auf der Oberseite des Trägerelements 1 außerhalb der Ausnehmung 2 bzw. in die Membranschicht 5 integriert mehrere elektrisch leitfähige Leiterbahnen 6.1, 6.2 angeordnet, über die eine elektrische Kontaktierung eines Sensorelements 3 erfolgt. Die Leiterbahnen 6.1, 6.2 können hierbei in der Membranschicht 5 sowohl in Dünnschichttechnik oder in Dickschichttechnik ausgebildet werden.

Oberhalb der Ausnehmung 2 ist in der erfindungsgemäßen Sensoranordnung auf der Membranschicht 5 das Sensorelement 3 angeordnet, das zur Messung der zu erfassenden jeweiligen Prozessgröße dient. Das Sensorelement 3, vorzugsweise ebenfalls gefertigt in Dünnschichttechnik, dient im dargestellten Ausführungsbeispiel zur Erfassung der Prozessgröße Temperatur; es besteht in bekannter Art und Weise aus mäanderförmig angeordneten Sensorwindungen aus elektrisch-leitfähigem Material, z.B. Platin. Ebenso können an dieser Stelle auch andere Metalle bzw. Metallverbindungen, basierend z.B. auf Molybdän-, Nickel- oder Siliziumlegierungen, eingesetzt werden. An ihren Enden sind die Sensorwindungen elektrisch leitend mit den Leiterbahnen 6.1, 6.2 verbunden. Wichtig ist im Zusammenhang mit der elektrischen Kontaktierung des Sensorelements 3 hierbei, dass die jeweilige Kontaktierung möglichst temperaturstabil ist und über die jeweilige Kontaktierung die thermische Ankopplung des Sensorelements 3 an den Rest der Sensoranordnung, also insbesondere an das Trägerelement 1, möglichst minimiert wird. Als geeignetes Kontaktierungsverfahren kann an dieser Stelle etwa Spaltschweißen vorgesehen werden.

Am zur Ausnehmung 2 entgegengesetzten Ende des Trägerelements 1 sind für die Leiterbahnen 6.1, 6.2 Anschlussbereiche 7.1, 7.2 bzw. Anschluss-Pads vorgesehen, über die die erfindungsgemäße Sensoranordnung mit einer - nicht dargestellten - Folgeelektronik elektrisch verbunden werden kann und über die eine weitere Verarbeitung der über das Sensorelement 3 erzeugten Signale erfolgt. Die Anschlussbereiche 7.1, 7.2 können hierbei auf verschiedene Art und Weise ausgebildet werden. So ist es möglich, diese in Dünnschichttechnologie, in Dickschichttechnologie oder aber als galvanisch verstärkte Bereiche auf dünnen Schichten zu realisieren. Die elektrisch leitfähige Verbindung der Anschlussbereiche 7.1, 7.2 mit der nachgeordneten Folgeelektronik kann hierbei z.B. über Draht-Bonden oder aber über Spaltschweißen erfolgen.

Aufgrund der erfindungsgemäßen Ausgestaltung der Sensoranordnung, insbesondere der Anordnung des Sensorelements 3 auf der Trägerschicht 4 und der Membranschicht 5 über der Ausnehmung 2 des Trägerelements 1, kann eine zuverlässige thermische Entkopplung des Sensorelements 3 vom Trägerelement 1 sichergestellt werden. Eine unerwünschte Wärmezu- und - abfuhr über das Trägerelement 1 lässt sich damit für das Sensorelement 3 minimieren. Auch in Hochtemperaturanwendungen ist deshalb hierbei die zuverlässige Erfassung der interessierenden Messgrößen gewährleistet. Gleichzeitig ist über die Anordnung des Sensorelements 3 auf der Membranschicht 5 und der Trägerschicht 4 eine mechanisch stabile Befestigung auf dem Trägerelement 1 gewährleistet.

Neben den erläuterten Beispielen existieren im Rahmen der vorliegenden Erfindung selbstverständlich noch weitere Ausgestaltungsmöglichkeiten.

So wäre es etwa - wie eingangs schon angedeutet - möglich, zusätzlich zu den Sensorwindungen des Sensorelements Heizerstrukturen anzuordnen. Diese können etwa in bekannter Art und Weise als stromdurchflossene metallische Leiterbahnen ausgebildet werden.

Ferner ist es möglich, dass das Sensorelement ein plättchenförmiges Trägersubstrat umfasst, auf dessen Oberseite Sensorwindungen angeordnet sind. Das Trägersubstrat könnte hierbei aus Glas, Keramikmaterialien oder aus Silizium ausgebildet werden. Das Trägersubstrat würde wiederum oberhalb der Ausnehmung auf der Membranschicht der erfindungsgemäßen Sensoranordnung platziert und fixiert werden.

Alternativ zur dargestellten Kontaktierungsvariante wäre bei einer solchen Ausbildung des Sensorelements eine temperaturstabile Kontaktierung des Sensorelements dann auch dergestalt realisierbar, dass dieses in der sog.

Flip-Chip-Technik ("face down") auf der Oberseite der Membranschicht angeordnet und die Kontaktierungsflächen über Hartlöten direkt auf die Leiterbahnen gelötet werden.

Desweiteren kann schließlich vorgesehen werden, dass die Leiterbahnen auf der Membranschicht mit einer geeigneten Schutzschicht versehen werden. Eine derartige Schutzschicht kann beispielsweise aus einer Glaspaste mit einer geeigneten Einbrenntemperatur und einem an das LTCC-Material angepassten Wärmeausdehnungskoeffizienten bestehen, das in Dickschichttechnik aufgebracht wird. Ebenso wäre es möglich, dass eine Schutzschicht durch Auflaminieren einer weiteren Lage des Materials der Membranschicht ausgebildet wird, d.h. z.B. durch Auflaminieren einer weiteren LTCC-Lage etc..

## Patentansprüche

1. Sensoranordnung zur Erfassung mindestens einer Prozessgröße, bestehend aus
- einem Trägerelement (1), das mindestens eine Ausnehmung (2) aufweist,
- einer auf dem Trägerelement (1) angeordneten Trägerschicht (4), wobei die Trägerschicht (4) als Transfertape ausgebildet ist, das beidseitig Haftflächen aufweist,
- einer über der Trägerschicht (4) zumindest im Bereich der Ausnehmung (2) angeordneten Membranschicht (5) mit ein oder mehreren elektrisch-leitfähigen Leiterbahnen (6.1, 6.2), wobei die Membranschicht (5) aus Keramik oder Glaskeramik besteht.
sowie
- mindestens einem auf der Membranschicht (5) angeordneten Sensorelement (3), das über eine temperaturstabile Kontaktierung mit mindestens einer Leiterbahn (6.1, 6.2) elektrisch leitend verbunden ist.

2. Sensoranordnung nach Anspruch 1, wobei das Trägerelement (1) aus Stahl ausgebildet ist.

3. Sensoranordnung nach Anspruch 1, wobei das Trägerelement (1) als plättchenförmiger Stab ausgebildet ist, an dessen einem Längsende die Ausnehmung (2) angeordnet ist.

4. Sensoranordnung nach Anspruch 3, wobei das Trägerelement (1) eine Dicke im Bereich zwischen 0,5 mm und 2 mm aufweist.

5. Sensoranordnung nach Anspruch 1, wobei die Trägerschicht (4) eine Dicke im Bereich zwischen 10 µm und 200 µm aufweist.

6. Sensoranordnung nach Anspruch 1, wobei die Membranschicht (5) aus einem LTCC-Material ausgebildet ist.

7. Sensoranordnung nach Anspruch 1, wobei die Leiterbahnen (6.1, 6.2) auf der Membranschicht (5) in Dünnschichttechnik oder in Dickschichttechnik ausgebildet sind.

8. Sensoranordnung nach Anspruch 1, wobei die Membranschicht (5) eine Dicke im Bereich zwischen 50 µm und 500 µm aufweist.

9. Sensoranordnung nach Anspruch 1, wobei die Materialien für das Trägerelement (1), die Trägerschicht (4) und die Membranschicht (5) derart gewählt sind, dass deren thermische Ausdehnungskoeffizienten um nicht mehr als 0.2 ppm/°C voneinander abweichen.

10. Sensoranordnung nach Anspruch 1, wobei das Sensorelement (3) als Dünnschicht- oder Dickschichtsensor ausgebildet ist, dessen Sensorwindungen mäanderförmig auf der Membranschicht (5) angeordnet sind.

11. Sensoranordnung nach Anspruch 1, wobei auf der Membranschicht (5) für jede Leiterbahn (6.1, 6.2) ein Anschlussbereich (7.1, 7.2) ausgebildet ist, über den das Sensorelement (3) mit einer Folgeelektronik verbindbar ist.

## Claims

1. Sensor arrangement for measuring at least one process variable, comprising
- a support element (1) which has at least one recess (2),
- a substrate (4) arranged on the support element (1), wherein the substrate (4) is formed as a transfer tape which has adhesive areas on both sides,
- a membrane layer (5) arranged above the substrate (4), at least in the area of the recess (2), having one or more electrically conductive conductor tracks (6.1, 6.2), wherein the membrane layer (5) consists of ceramic or glass ceramic, and
- at least one sensor element (3), which is arranged on the membrane layer (5) and is electrically conductively connected to at least one conductor track (6.1, 6.2) via a temperature-stable contact-making means.

2. Sensor arrangement according to Claim 1, wherein the support element (1) is formed from steel.

3. Sensor arrangement according to Claim 1, wherein the support element (1) is formed as a plate-like rod, at one longitudinal end of which the recess (2) is arranged.

4. Sensor arrangement according to Claim 3, wherein the support element (1) has a thickness in the range between 0.5 mm and 2 mm.

5. Sensor arrangement according to Claim 1, wherein the substrate (4) has a thickness in the range between 10 µm and 200 µm.

6. Sensor arrangement according to Claim 1, wherein the membrane layer (5) is formed from an LTCC material.

7. Sensor arrangement according to Claim 1, wherein the conductor tracks (6.1, 6.2) on the membrane layer (5) are formed using thin layer technology or thick layer technology.

8. Sensor arrangement according to Claim 1, wherein the membrane layer (5) has a thickness in the range between 50 µm and 500 µm.

9. Sensor arrangement according to Claim 1, wherein the materials for the support element (1), the substrate (4) and the membrane layer (5) are chosen in such a way that their thermal expansion coefficients differ from one another by no more than 0.2 ppm/°C.

10. Sensor arrangement according to Claim 1, wherein the sensor element (3) is formed as a thin layer or thick layer sensor, the sensor windings of which are arranged in a meandering fashion on the membrane layer (5).

11. Sensor arrangement according to Claim 1, wherein a connection area (7.1, 7.2), via which the sensor element (3) can be connected to follower electronics, is formed on the membrane layer (5) for each conductor track (6.1, 6.2).

## Revendications

1. Dispositif à capteur destiné à la détection d'au moins une variable de processus et constitué de :
- un élément de support (1), lequel présente au moins un évidement (2) ;
- une couche de support (4) qui est disposée sur l'élément de support (1), selon lequel la couche de support (4) est conçue sous la forme d'un film de transfert (Tape) qui présente des surfaces adhésives sur ses deux faces ;
- une couche de membrane (5) qui est disposée au-dessus de la couche de support (4), tout au moins dans la zone de l'évidement (2), avec une ou plusieurs pistes conductrices (6.1, 6.2) de type électriquement conductrices, selon lequel la couche de membrane (5) est composée de céramique ou de vitrocéramique ; ainsi que
- au moins un élément de capteur (3) qui est disposé sur la couche de membrane (5) et qui est relié de manière électriquement conductrice à au moins une piste conductrice (6.1, 6.2) par l'intermédiaire d'une mise en contact stable en température.

2. Dispositif à capteur selon la revendication 1, selon lequel l'élément de support (1) est conçu en acier.

3. Dispositif à capteur selon la revendication 1, selon lequel l'élément de support (1) est conçu sous la forme d'une tige en forme de plaquette, à l'une des extrémités longitudinales de laquelle l'évidement (2) est disposé.

4. Dispositif à capteur selon la revendication 3, selon lequel l'élément de support (1) présente une épaisseur comprise entre 0,5 mm et 2 mm dans la zone.

5. Dispositif à capteur selon la revendication 1, selon lequel la couche de support (4) présente une épaisseur comprise entre 10 µm et 200 µm dans la zone.

6. Dispositif à capteur selon la revendication 1, selon lequel la couche de membrane (5) est conçue en un matériau en céramique à cuisson simultanée à basse température (LTCC).

7. Dispositif à capteur selon la revendication 1, selon lequel les pistes conductrices (6.1, 6.2) se trouvant sur la couche de membrane (5) sont conçues selon une technique en couches minces ou selon une technique en couches épaisses.

8. Dispositif à capteur selon la revendication 1, selon lequel la couche de membrane (5) présente une épaisseur comprise entre 50 µm et 500 µm dans la zone.

9. Dispositif à capteur selon la revendication 1, selon lequel les matériaux employés pour l'élément de support (1), la couche de support (4) et la couche de membrane (5) sont sélectionnés de telle sorte que leurs coefficients de dilatation thermique ne s'écartent pas de plus de 0,2 ppm/°C l'un par rapport à l'autre.

10. Dispositif à capteur selon la revendication 1, selon lequel l'élément de capteur (3) est conçu sous la forme d'un capteur à couches minces ou sous la forme d'un capteur à couches épaisses, dont les spires du capteur sont disposées en forme de méandres sur la couche de membrane (5).

11. Dispositif à capteur selon la revendication 1, selon lequel une zone de connexion (7.1, 7.2) est conçue sur la couche de membrane (5) pour chaque piste conductrice (6.1, 6.2), par l'intermédiaire de laquelle zone de connexion (7.1, 7.2) l'élément de capteur (3) peut être connecté à une électronique séquentielle.
